# EUROPÄISCHE PATENTSCHRIFT

(11) **EP 0 366 023 B1**
(45) Veröffentlichungstag und Bekanntmachung des Hinweises auf die Patenterteilung: **08.09.1993**
(21) Anmeldenummer: 89119538.0
(22) Anmeldetag: 20.10.1989
(51) Int. Cl.: F16C 29/06

(54) **Linearkugelbüchse**
Linear ball sleeve
Manchon à billes pour palier linéaire

(30) Priorität: 21.10.1988 DE 3835971; 31.03.1989 DE 3910469
(43) Veröffentlichungstag der Anmeldung: 02.05.1990
(73) Patentinhaber: Deutsche Star GmbH, 97424 Schweinfurt (DE)
(72) Erfinder: Albert, Ernst, D-8729 Sand/Main (DE); Blaurock, Günter, D-8721 Niederwerrn (DE)
(74) Vertreter: Weickmann, Heinrich, Dipl.-Ing.

(56) Entgegenhaltungen:
- DE-A- 2 003 535
- DE-A- 3 507 760
- DE-A- 3 512 013
- DE-B- 1 287 382
- DE-C- 1 949 182
- DE-U- 8 811 178
- FR-A- 2 075 227
- FR-A- 2 335 727

## Beschreibung

Die Erfindung betrifft eine Linearkugelbüchse umfassend einen Käfig mit einer Käfigachse und mit einer Mehrzahl von Kugelumläufen,
wobei jeder Kugelumlauf zwei zur Käfigachse im wesentlichen parallele Geradkugelreihen, nämlich eine Tragkugelreihe und eine Rücklaufkugelreihe und zwei die beiden Geradkugelreihen verbindende Bogenkugelreihen aufweist,
wobei weiter jeder der Kugelumläufe längs einer geschlossenen Laufbahn nach radial außen an der Innenfläche einer Laufplatte anliegt, welche in eine zugehörige Ausnehmung des Käfigs eingesetzt ist und eine Außenfläche zur Anlage an einer Innenumfangsfläche einer den Käfig aufnehmenden Lagergehäusebohrung besitzt,
wobei weiter die geschlossene Laufbahn zwei Geradlaufbahnabschnitte, nämlich einen tragenden Geradlaufbahnabschnitt für die Tragkugelreihe und einen rückführenden Geradlaufbahnabschnitt für die Rücklaufkugelreihe und zwei die Geradlaufbahnabschnitte verbindende Bogenlaufbahnabschnitte aufweist,
wobei weiter der tragende Geradlaufbahnabschnitt, bezogen auf die Außenfläche der Laufplatte, auf einem höheren und der rückführende Geradlaufbahnabschnitt, bezogen auf die Außenfläche der Laufplatte, auf einem tieferen Niveau liegt und die Bogenlaufbahnabschnitte die entsprechenden Niveauunterschiede allmählich überwinden,
wobei weiter die Geradlaufbahnabschnitte durch eine Mittelrippe voneinander getrennt sind und
wobei die jeweilige Tragkugelreihe nach radial innen einen Schlitz des Käfigs teilweise durchdringt, um an einer von dem Käfig umschlossenen Welle Anlage nehmen zu können und die jeweilige Rücklaufkugeireihe nach radial innen durch den Käfig abgestützt ist.

Eine solche Linearkugelbüchse ist aus der DE-A-3 512 013 bekannt. Bei der bekannten Ausführungsform sind die beiden Geradlaufbahnabschnitte durch eine Mittelrippe voneinander getrennt ausgebildet sind. Die Mittelrippe endet dabei endgültig in Abständen von den Enden der Laufplatte. Zwischen dem jeweiligen Ende der Mittelrippe und dem zugehörigen Ende der Laufplatte sind Planflächen ausgebildet, welche parallel sind zu der durch die Kugelmittelpunkte des Kugelumlaufs definierten Ebene. Damit ist jede seitliche Führung der Kugeln im Bereich der Bogenlaufbahnabschnitte ausgeschaltet. Dies wird in der DE-A-35 12 013 als die erfinderische Besonderheit herausgestellt, mit der Begründung, daß damit die Notwendigkeit einer präzisen, gegenseitigen Anpassung seitlicher Führung im Käfig und seitlicher Führung in der Laufplatte im Bereich des jeweiligen Bogenlaufbahnabschnitts vermieden sei.

Zur Herstellung der aus hartem Stahl bestehenden Laufplatten wird nach der DE-A-35 12 013 von Rohlingen ausgegangen, die von einem Stangenmaterial abgelängt worden sind. Eine Laufbahnrille der Laufplatte wird zusammen mit einer Innenschulter und einer Aussenschulter auf ihrer gesamten Länge mit einer Profilschleifscheibe geschliffen.

Der Erfindung liegt die Aufgabe zugrunde, bei einer Linearkugelbüchse der eingangs bezeichneten Art eine Gestaltung der Laufplatte anzugeben, welche unter Erhaltung einer möglichst vollständigen Kugelführung über den ganzen Kugelumlauf die Bearbeitung der Geradlaufbahnabschnitte und insbesondere des tragenden Geradlaufbahnabschnitts erleichtert.

Zur Lösung dieser Aufgabe wird erfindungsgemäß vorgeschlagen, daß die Mittelrippe bis an die Enden der Laufplatte hin im wesentlichen profilkonstant fortgesetzt und von den Bogenlaufbahnabschnitten durchquert ist, und daß Verlängerungen der beiden Geradlaufbahnabschnitte bis an die Enden der Laufplatte im wesentlichen profilkonstant fortgesetzt sind unter Verschneidung mit den Bogenlaufbahnabschnitten.

Bei der erfindungsgemäßen Ausbildung der Laufplatte ist es möglich, die bis an die Enden der Laufplatte im wesentlichen profilkonstant fortgesetzten Geradlaufbahnabschnitte und hier insbesondere wieder den tragenden Geradlaufbahnabschnitt mit herkömmlichen Oberflächenbehandlungsmethoden zu bearbeiten, insbesondere zu schleifen. Die Parallelität der beiden Geradlaufbahnabschnitte erlaubt es dabei, gegebenenfalls beide Geradlaufbahnabschnitte gemeinsam mit einem einzigen Schleifwerkzeug zu schleifen. Dadurch daß die Mittelrippe von dem Bogenlaufbahnabschnitten durchquert ist, bleibt die Führung der Kugeln auf dem größten Teil des Kugelumlaufs erhalten, jedenfalls im Scheitel der Kugelumläufe.

Aus der DE-OS 20 03 535 ist es bekannt, bei einer Laufplatte, welche nur den tragenden Geradlaufbahnabschnitt und an diesen anschließend Teilbögen der Bogenlaufbahnabschnitte aufweist, also keinen rückführenden Geradlaufbahnabschnitt und demgemäß auch keine ausgeprägte Rippe besitzt, den tragenden Geradlaufbahnabschnitt unter Verschneidung mit den zugehörigen Teilbögen der Bogenlaufbahnabschnitte bis an die Enden der Laufplatte fortzusetzen. Bei einer solchen Ausführungsform ist die vollständige Führung der Kugeln an der Laufbahnplatte über den gesamten Kugelumlauf gerade nicht erreicht.

Es hat sich gezeigt, daß eine erfindungsgemäße Lösung mit weitgehender seitlicher Führung der Kugeln auch im Bereich der Bogenlaufbahnabschnitte und insbesondere in deren an den tragenden Laufbahnabschnitten anschließenden Teilbereiche bis etwa zum Scheitel des jeweiligen Bogenlaufbahnabschnitts für die Lebensdauer und für die Laufruhe, d. h. einen Kugelablauf ohne nennenswerte Reibkraftschwankungen, von Vorteil ist, dem zuliebe die erhöhten Präzisionsanforderungen in der gegenseitigen Anpassung von Käfig- und Laufbahnplatten in Kauf genommen werden sollten.

Die Laufplatten können bei der erfindungsgemäßen Ausbildung grundsätzlich durch eine verhältnismäßig einfache,mechanische Bearbeitung aus dem vollen gefräst werden dank der Profilkonstanz. Eine besonders einfache Möglichkeit für die Bereitstellung der Laufplattenrohlinge ergibt sich aber wiederum wegen der Profilkonstanz in Form der Extrusion eines Metallrohlings oder eines pulvermetallurgischen Haufwerks.

In den so gewonnenen Rohlingen können die Bogenlaufbahnabschnitte durch Prägung gebildet werden.

Dadurch daß die Rippe von den Bogenlaufbahnabschnitten durchquert wird, sich also zu beiden Seiten der Bogenlaufbahnabschnitte zumindest in deren Scheitelbereich erhebt, ist eine seitliche Führung der Kugeln jedenfalls im Scheitelbereich der Bogenlaufbahnabschnitte gewährleistet.

Nach einer bevorzugten Ausführungsform der Erfindung ist vorgesehen, daß der Niveauabfall der Laufbahn von dem Niveau des tragenden Geradlaufbahnabschnitts in Richtung auf das Niveau des rückführenden Geradlaufbahnabschnitts jeweils im Bereich geradliniger Endfortsätze des tragenden Geradlaufbahnabschnitts beginnt.

Durch diese Maßnahme wird erreicht, daß auf dem ganzen Teilbogen des Bogenlaufbahnabschnitts, der sich über etwa 90° vom Ende des tragenden Geradlaufbahnabschnitts bis zum Scheitel des jeweiligen Bogenlaufbahnabschnitts erstreckt, eine erhebliche Seitenführung der Kugel gewährleistet ist, trotz der Fortsetzung des Geradlaufbahnabschnitts zum zugehörigen Laufplattenende hin, in dem nämlich die Sohle des Bogenlaufbahnabschnitts in diesem Teilbogenbereich durchwegs tiefer liegt als die Sohle des fortgesetzten Geradlaufbahnabschnitts.

Der im Bereich eines geradlinigen Endfortsatzes des tragenden Geradlaufbahnabschnitts bestehende Niveauabfall kann natürlich auch durch die Prägebearbeitung gewonnen werden, die zur Bildung des Bogenlaufbahnabschnitts angewandt wird. Durch diese Maßnahme wird überdies ein besonders sanfter Einsatz des Niveauabfalls erreicht, der für die Laufruhe bedeutsam ist.

Es ist weiterhin möglich, daß die Laufbahn jeweils im Übergangsbereich zwischen den Bogenstrecken der Bogenlaufbahnabschnitte und der Rücklaufgeraden des rückführenden Geradlaufbahnabschnitts ein Niveauminimum durchläuft.

Durch diese Maßnahme wird erreicht, daß auch in dem Teilbogenbereich eines Bogenlaufbahnabschnitts, der sich von dessen Scheitel zu dem rückführenden Geradlaufbahnabschnitt hin erstreckt, noch eine gewisse Seitenführung der Kugeln gewährleistet ist, insbesondere dann, wenn entsprechend einer Weiterbildung vorgesehen ist, daß die Laufbahn im Bereich geradliniger Endfortsätze des rückführenden Geradlaufbahnabschnitts von dem jeweiligen Niveauminimum auf das Niveau des rückführenden Geradlaufbahnabschnitts allmählich ansteigt.

Es hat sich gezeigt, daß trotz des Vorhandenseins eines Niveauminimums die Laufruhe nicht reduziert, sondern verbessert wird, was darauf zurückzuführen sein dürfte, daß der Übergang von dem geprägten Bogenlaufbahnabschnitt zu dem anderweitig hergestellten Geradlaufbahnabschnitt in die Rücklaufgerade zu liegen kommt und deshalb besonders sanft ausgebildet werden kann, auch wenn nach dem Prägen noch ein Schleifen des rückführenden Geradlaufbahnabschnitts erfolgt.

Im Hinblick auf eine möglichst exakte Kugelführung, die wiederum für die Laufruhe verantwortlich ist, wird empfohlen, daß die Geradlaufbahnabschnitte und/oder Bogenlaufbahnabschnitte einen Rillenquerschnitt besitzen, dessen Krümmungsradius annähernd gleich, vorzugsweise geringfügig größer, ist wie der Kugelradius.

Um der durch die Linearkugelbüchse geführten Welle ein gewisses Winkelanpassungsspiel zu gewähren, wird vorgeschlagen, daß die Laufplatten an der Innenumfangsfläche der den Käfig aufnehmenden Lagergehäusebohrung schaukelnd anliegen, und zwar um eine Schaukelachse, welche in einer zur Käfigachse senkrechten Ebene annähernd tangential zur Käfigachse liegt, und zwar vorzugsweise im Bereich der Längsmitte der Kugelbüchse. Bei hartelastischem Käfigmaterial empfiehlt es sich im Hinblick auf die Schaukelfähigkeit die Laufplatten in dem Käfig mit Bewegungsspiel aufzunehmen. Bei weich elastischem Käfigmaterial könnte die Schaukelfähigkeit auch von elastischer Verformbarkeit des Käfigmaterials abgeleitet werden. Die schaukelnde Anlage an der Innenumfangsfläche der Lagergehäusebohrung kann auf einfachste Weise dadurch verwirklicht werden, daß die Außenfläche der Laufplatte von einem im Bereich der Schaukelachse gelegenen Mittelbereich zu den Enden der Laufplatte hin bezüglich der Käfigachse radial einwärts abfällt.

Die Erfindung betrifft im Hinblick auf die oben formulierte Aufgabe ferner ein Verfahren zur Herstellung einer Laufplatte für die Kugelbüchse. Dieses Verfahren besteht darin, daß
a) ein Profilstab bereitgestellt wird, welcher eine Außenfläche und eine Innenfläche besitzt, wobei an der Innenfläche zwei zueinander parallele, in Längsrichtung des Profilstabs verlaufende durch eine Mittelrippe voneinander getrennte Geradrillen ausgebildet sind und wobei die eine dieser Geradrillen ein höheres Niveau gegenüber der Außenfläche und die andere Geradrille ein niedrigeres Niveau gegenüber der Außenfläche besitzt;
b) in die Innenseite der Laufplatte Bogenrillen eingeprägt werden, welche die Mittelrippe queren und die niveauhöhere Geradrille mit der niveauniedrigeren Geradrille niveauüberwindend verbinden.

Die Bereitstellung des Profilstabs kann dabei nach einer der weiter oben beschriebenen Methoden erfolgen.

Dabei kann mindestens eine der Geradrillen nach dem Einprägen der Bogenrillen geschliffen werden, wobei es sich nach obigem versteht, daß insbesondere diejenige Bogenrille geschliffen wird, welche den tragenden Laufbahnabschnitt ergibt, also die niveauhöhere Geradrille.

Um eine Seitenführung der Kugeln auch in den an den rückführenden Geradlaufbahnabschnitt angrenzenden Teilen der Bogenlaufbahnabschnitte zu erhalten, wird vorgeschlagen, daß die Prägetiefe der Bogenrillen in den Anschlußbereichen an die niveauniedrigere Geradrille derart gewählt wird, daß dort Niveauminima entstehen und gegebenenfalls auch nach dem Schleifen der niveauniedrigeren Geradrille noch vorhanden sind.

Um das Prägen der Aussparungen zu ermöglichen, ohne daß das Laufplattenmaterial unkontrolliert abfließt, wird vorgeschlagen, daß an den Enden des Profilstabs Aussparungen bereitgestellt werden, welche beim Prägen wenigstens einen Teil des verdrängt werdenden Laufplattenmaterials aufnehmen. Dabei können Prägewerkzeuge verwendet werden, welche der Form des Profilstabs angepaßt sind, auch hinsichtlich der Aussparung, und zwar so, daß die Form nach erfolgtem Prägen vollständig gefüllt ist, daß also auch im Bereich der Aussparung definierte Kanten und Flächen entstehen.

Die Außenfläche kann vor oder nach dem Schleifen der Geradrillen geschliffen werden, gegebenenfalls so, daß die Schaukelfähigkeit eintritt. Besonders empfohlen wird, daß die Außenfläche nach dem Schleifen der Geradrillen geschliffen wird, wobei die geschliffenen Geradrillen zur Positionierung des Profilstabs beim Schleifen der Außenfläche verwendet werden.

Im Gegensatz zu bekannten Ausführungsformen, bei denen die Laufplatten in ihrer Längsmitte ein scheitelförmiges Kipplager an ihrer Aussenseite besitzen oder an ihrer Aussenseite auf deren ganzer Länge stetig ballig ausgeführt sind, wird in weiterer Ausgestaltung der Erfindung vorgeschlagen, dass die Laufplatte an ihrer Aussenfläche einen mittleren Bereich aufweist, welcher parallel zur Laufbahn der Tragkugelreihe verläuft und dass an diesen mittleren Längsbereich über nach radial aussen konvexe Verrundungen axial äussere Längsbereiche anschliessen, welche nach axial aussen und radial innen vorzugsweise geradlinig verlaufen.

Es hat sich gezeigt, dass eine solche Ausgestaltung wegen der geringeren Flächenpressung im Bereich des axial mittleren Längsabschnitts gegen elastische oder plastische Verformungen und insbesondere gegen Abnutzungserscheinungen beständiger ist als die genannten bekannten Ausführungsformen. Gleichwohl bleibt eine Kippfähigkeit erhalten.

Besonders empfohlen wird, dass die axiale Gesamtlänge einer Tragkugelreihe ca. 100 % bis ca. 200 %, vorzugsweise ca. 130 % bis ca. 180 % des zugehörigen Wellendurchmessers beträgt,
dass die axiale Länge des mittleren Längsbereichs ca. 2 % bis ca. 15 % des zugehörigen Wellendurchmessers, vorzugsweise ca. 5 % bis ca. 10 % des zugehörigen Wellendurchmessers beträgt,
dass die Verrundung einen Krümmungsradius besitzt, welcher mehr als 100 %, vorzugsweise mehr als 150 %, beispielsweise 167 % bis 300 % des zugehörigen Wellendurchmessers beträgt und
dass die Neigung der axial äusseren Längsbereiche gegenüber der Laufbahn der Tragkugelreihe im Mittel ca. 25 bis ca. 45 Winkelminuten, vorzugsweise ca. 35 Winkelminuten beträgt.

Diese Bemessungsvorschriften erweisen sich deshalb als besonders günstig, weil die bei einem etwaigen Fluchtverlust der Welle gegenüber der das Linearkugellager aufnehmenden Bohrung die wegen der Geradlinigkeit der Längsmittelabschnitte unvermeidlich auftretende Annäherung diametral einander gegenüberliegender Tragkugelreihen innerhalb akzeptabler Grenzen verbleibt, so dass auch die Flächenpressung der Kugeln gegen die Welle und gegen die Innenflächen der Laufplatten innerhalb akzeptabler Grenzen verbleiben.

Der Gedanke der axialen Geradlinigkeit mittlerer Längsabschnitte der Laufplattenaussenflächen ist auch dann anwendbar, wenn nur die Tragkugelreihen nach radial aussen durch die Laufplatten geführt sind und die Rücklaufkugelreihen anderweitig innerhalb des Käfigs geführt sind.

Zum Stand der Technik bezüglich der Lagerung der Laufplatten an ihrer Aussenfläche wird auf die DE-C-19 49 182 und auf die DE-A-35 07 760 verwiesen. Die in der erstgenannten Schrift beschriebene Linearkugelbüchse zeigt Laufplatten, die an der Lagergehäusebohrung nur mit Linienberührung anliegen, so dass hohe Flächenpressung zu erwarten ist.

Bei der in der DE-A-35 07 760 beschriebenen Linearkugelbüchse sind die Laufplatten an ihrer Aussenfläche durch Einprägungen eines Umfassungsmantels gelagert. Dieser Umfassungsmantel führt zu einer unerwünschten Vergrösserung des Aussendurchmessers, der allenfalls durch dünne Laufplatten oder kleine Kugel ausgeglichen werden kann. Bei der erfindungsgemässen Ausbildung ist ein Umfassungsmantel nicht erforderlich. Die Linearkugelbüchse kann in die Lagergehäusebohrung so eingesetzt werden, dass die Laufplatten unmittelbar an deren Innenumfangsfläche anliegen.

Die Schaukelfläche kann mit einem mittleren Bereich geformt werden, welcher parallel zur Laufbahn der Tragkugelreihe verlauft; an diesen mittleren Bereich anschließend können nach radial außen konvexe Verrundungen und an diese wiederum anschließend axial aüßere Langsbereiche geformt werden, welche nach axial außen und radial innen vorzugsweise geradlinig verlaufen.

Dabei kann die axiale Gesamtlänge einer Tragkugelreihe mit ca. 100 % bis ca. 200 %, vorzugsweise ca. 130 % bis ca. 180 % des zugehörigen Wellendurchmessers bemessen werden,
die axiale Länge des mittleren Längsbereichs mit ca. 2 % bis ca. 15 % des zugehörigen Wellendurchmessers, vorzugsweise ca. 5 % bis ca. 10 % des zugehörigen Wellendurchmessers bemessen werden,
die Verrundung mit einem Krümmungsradius ausgeführt werden, welcher mehr als 100 %, vorzugsweise mehr als 150 %, beispielsweise 167 % bis 300 % des zugehörigen Wellendurchmessers beträgt und
die Neigung der axial äusseren Längsbereiche gegenüber der Laufbahn der Tragkugelreihe so eingestellt werden, daß sie im Mittel ca. 25 bis ca. 45 Winkelminuten, vorzugsweise ca. 35 Winkelminuten beträgt.

Die beiliegenden Figuren erläutern die Erfindung anhand eines Ausführungsbeispiels. Es stellen dar:
Figur 1 einen Längsschnitt durch eine erfindingsgemässe Linearkugelbüchse;
Figur 2 einen Querschnitt nach Linie II - II der Figur 1;
Figur 3 eine Ansicht der Innenseite einer Laufplatte;
Figur 4 eine Endansicht einer Laufplatte gemäss Figur 3;
Figur 5 einen Schnitt nach Linie V - V der Figur 3;
Figur 6 eine Vergrösserung des Bereichs VI der Figur 5 in einem Schnitt entsprechend demjenigen der Figur 5;
Figur 7 eine Vergrösserung eines Endabschnitts der Laufplatte gemäss Figur 3;
Figur 8 einen Schnitt nach Linie VIII - VIII der Figur 7;
Figur 9 einen Schnitt nach Linie IX - IX der Figur 7;
Figur 10 einen Schnitt nach Linie X - X der Figur 8;
Figur 11 einen Schnitt nach Linie XI - XI der Figur 8;
Figur 12 einen Niveauplan mit tabellarischer Erfassung der Sohlenniveaus der Laufbahn in einem Endabschnitt der Laufplatte gemäss Figur 7;
Figur 13 einen Querschnitt durch einen Käfig entlang Linie II - II der Figur 1, jedoch nach Entfernung der Laufplatten und Kugeln;
Figur 14 ein Detail zu Figur 13 in Vergrösserung;
Figur 15 eine Teilansicht des Käfigs in Pfeilrichtung XV der Figur 13;
Figur 16 einen Längsschnitt durch den Käfig nach Linie XVI - XVI der Figur 13;
Figur 17 einen Längsschnitt nach Linie XVII - XVII der Figur 13;
Figur 18 eine Teilansicht einer Laufplatte entsprechend Figur 7, jedoch mit einer Endabschrägung;
Figur 19 einen Schnitt nach Linie XIX - XIX der Figur 15 beim Einfüllen von Kugeln;
Figur 20 einen Schnitt durch ein Linearkugellager gemäss Figur 1, jedoch insofern abgewandelt, als der Käfig zur Aufnahme einer Unterstützung für die Welle teilringförmig ausgebildet ist;
Figur 21 ein Detail entsprechend der Stelle XXI der Figur 20 in Vergrösserung;
Figur 22 eine Endansicht eines Linearkugellagers gemäss Figur 20, wobei ein ebenfalls teilringförmiger , topfringförmiger Endring abgenommen ist;
Figur 23 eine Vergrösserung des Details XXIII der Figur 22;
Figur 24 einen Schnitt nach Linie XXIV - XXIV der Figur 23;
Figur 25 einen Schnitt nach Linie XXV - XXV der Figur 23;
Figur 26 eine Teilansicht in Richtung des Pfeiles XXVI der Figur 22, teilweise geschnitten;
Figur 27 eine Längsdichtungsleiste als Detail zur Figur 26 und
Figur 28 eine Darstellung der Laufplatte entsprechend Figur 6.

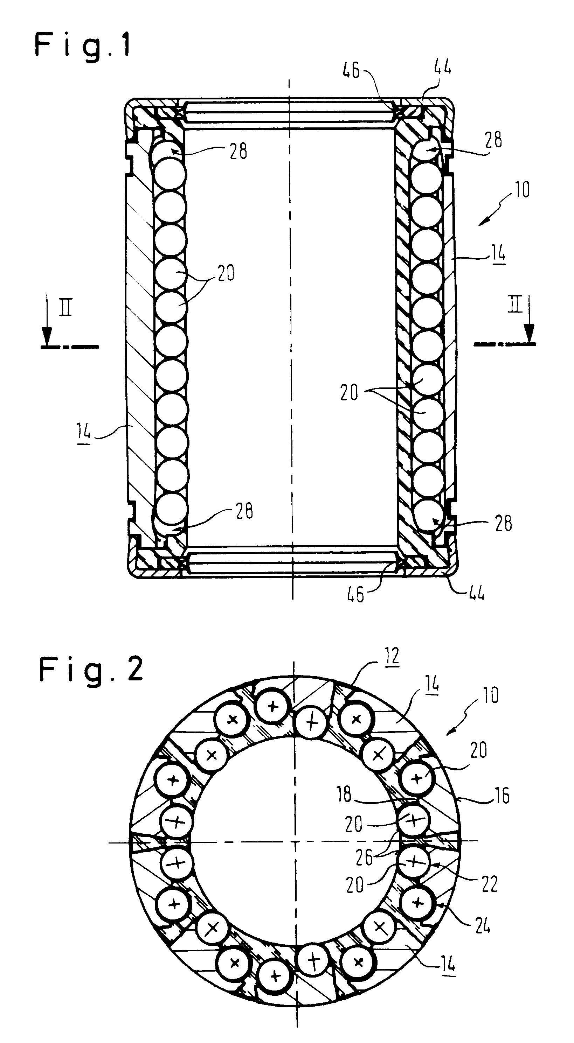

In Figur 1 und 2 ist eine Linearkugelbüchse ganz allgemein mit 10 bezeichnet. Sie umfaßt einen Käfig 12 aus hartelastischem Kunststoff. In diesen Käfig 12 sind Laufplatten 14 eingesetzt, welche jeweils eine Außenumfangsfläche 16 zur Anlage an einer die Linearkugelbüchse 10 aufnehmenden Lagergehäusebohrung und eine Innenumfangsfläche 18 besitzen. Die Laufplatten 14 bestehen aus einem harten Werkstoff, insbesondere gehärtetem Stahl. Durch den Käfig 12 und die Laufplatten 14 ist jeweils eine Führung für einen Kugelumlauf gebildet. Die Kugeln sind mit 20 bezeichnet. Jeder Kugelumlauf bildet eine Tragkugelreihe 22 und eine Rücklaufkugelreihe 24. Die Tragkugelreihen 22 ragen durch Schlitze 26 des Käfigs 12 hindurch nach radial innen zur Anlage an einer nicht dargestellten Welle. Die Rücklaufkugelreihen 24 sind nach radial innen durch den Käfig 12 gestützt. Beide Geradkugelreihen 22 und 24 liegen an der Innenumfangsfläche 18 der jeweiligen Laufplatte 14 an. Die Tragkugelreihe 22 und die Rücklaufkugelreihe 24 sind jeweils durch Bogenkugelreihen 28 verbunden. Die Laufplatten 14 sind in dem Käfig 12 formschlüssig gehalten, jedoch mit einem gewissen Bewegungsspiel.

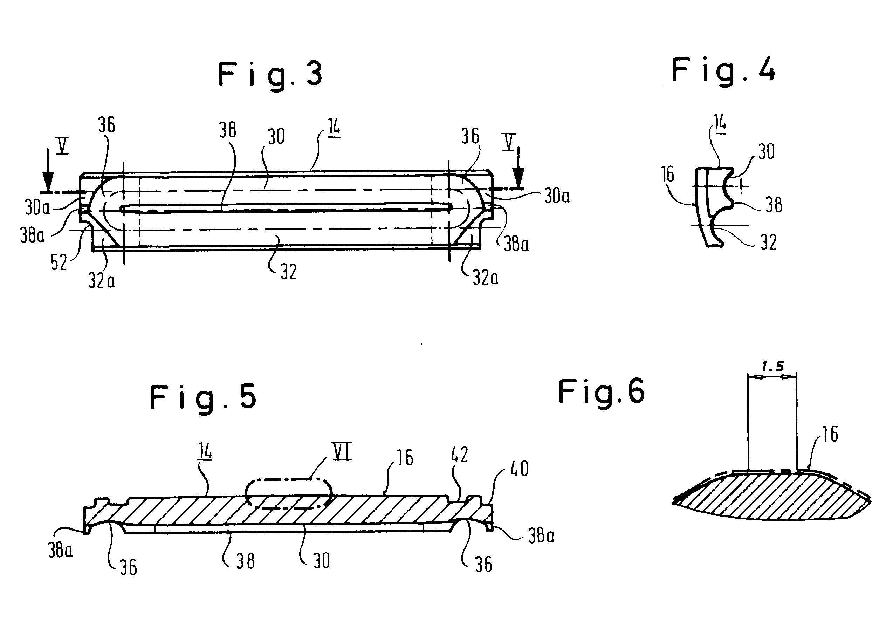

In Figuren 3, 4 und 5 ist eine Laufplatte 14 im einzelnen dargestellt. Diese Laufplatte 14 ist auf der Basis eines Profilstabs hergestellt, dessen Profil aus Figur 4 ersichtlich ist. Die Laufplatte 14 weist einen tragenden Geradlaufbahnabschnitt 30 auf, welcher gegenüber der Außenumfangsfläche 16 ein erstes höheres Niveau besitzt und einen rückführenden Geradlaufbahnabschnitt 32, welcher gegenüber der Außenumfangsfläche 16 ein niedrigeres Niveau besitzt. Der tragende Laufbahnabschnitt 30 dient zur Aufnahme der Tragkugelreihe 22 und der Geradlaufbahnabschnitt 32 zur Aufnahme der Rücklaufkugelreihe 24. Die beiden Geradlaufbahnabschnitte 30 und 32 sind durch Bogenlaufbahnabschnitte 36 miteinander verbunden. Die Geradlaufbahnabschnitte 30 und 32 erstrecken sich jedoch mit den Endabschnitten 30a bzw. 32a im wesentlichen profilkonstant bis an die Enden der Laufplatte 14. Zwischen den Geradlaufbahnabschnitten 30 und 32 liegt eine Mittelrippe 38. Die Mittelrippe 38 setzt sich mit Endabschnitten 38a bis an die Enden der Laufplatte 14 profilkonstant fort und ist durch die Bogenlaufbahnabschnitte 36 lediglich unterbrochen. An ihrer Aussenumfangsfläche 16 ist die Laufbahnplatte, wie in Figur 6 dargestellt, gekrümmt, so daß sie schaukelnd an der Innenumfangsfläche einer Lagergehäusebohrung zur Anlage kommt. Wie aus Figur 4 ersichtlich sind die Geradlaufbahnabschnitte 30 und 32 gerundet mit einem Krümmungsradius, der gleich oder wenig größer ist als der Radius der Kugeln 20.

In Figur 5 erkennt man an den Enden der Laufplatte Ausdrehungen 40 und 42. Die Ausdrehungen 40 sind zur Aufnahme von topfförmigen Endringen 44 (Figur 1) bestimmt, welche die Laufplatte 14 und Abschlußscheiben 46 am Käfig 12 sichern. Die Eindrehungen 42 sind dazu bestimmt, Sicherungsringe zur axialen Sicherung der Kugelbüchse in einer Aufnahmebohrung aufzunehmen.

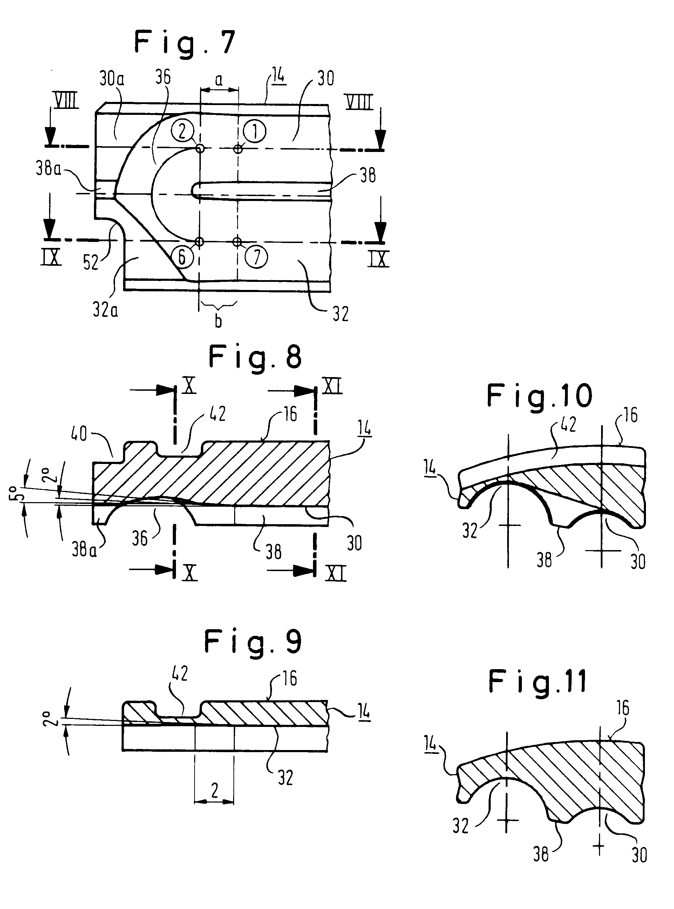

Nähere Einzelheiten über die Ausbildung der Laufbahnen ergeben sich aus den Figuren 7 bis 11. Die Bogenlaufbahnabschnitte 36 erstrecken sich über annähernd 180° und sind annähernd kreisförmig gekrümmt. Der Niveauabfall von dem Geradlaufbahnabschnitt 30 zu dem Geradlaufbahnabschnitt 32 beginnt bereits in einem Endabschnitt a des Geradlaufbahnabschnitts 30. Dadurch liegt die Sohle des Bogenlaufbahnabschnitts 36 im Bereich der Verschneidung mit dem Geradlaufbahnabschnitt 30 tiefer als eine gedachte Fortsetzung der Sohle des Geradlaufbahnabschnitts 30,und eine Seitenführung der Kugeln ist auch in diesem Verschneidungsbereich gewährleistet. Das Niveaugefälle im Endabschnitt a ist durch die Winkelangabe 2° in Figur 8 dargestellt. Das Niveaugefälle im unmittelbar anschließenden Bereich des Bogenlaufbahnabschnitts 36 beträgt, wie in Figur 8 ebenfalls dargestellt, ca. 5°. Es treten keine Niveausprünge auf. Die Gefällsübergänge sind abgerundet. Die Längsausdehnung des Endabschnitts a ist auch nach dem Schleifen so groß, daß die belasteten Kugeln vor Einlauf in den Bogenlaufbahnabschnitt 36 kontinuierlich entlastet werden können. Dies gilt analog auch für die in die Lastzone eintretenden Kugeln. Durch diese Maßnahme ist ein gleichmäßiger und ruckfreier Ablauf gewährleistet. An der Stelle ⑥ in Figur 7 besitzt die Bogenlaufbahn 36 ein Niveauminimum, welches unter dem Niveau der rückführenden Geradlaufbahn 32 liegt. Im Endabschnitt b des rückführenden Geradlaufbahnabschnitts 32 findet ein langsamer Niveauanstieg statt. Es treten keine Niveausprünge auf. Die Gefällsübergänge sind verrundet. Das Niveauminimum ⑥ ist auch nach dem Schleifen des rückführenden Geradlaufbahnabschnitts 32 noch vorhanden. Die Gefällsstrecken a und b der Geradlaufbahnabschnitte 30, 32 sind zusammen mit den Bogenlaufbahnabschnitten 36 geprägt. Die Verjüngung der Rippenbreite der Mittelrippe 38 im Bereich der Endabschnitte a und b ergibt einen trichterförmigen Übergang des Bogenlaufbahnabschnitts 36 in die Geradlaufbahnabschnitte 30 und 32.

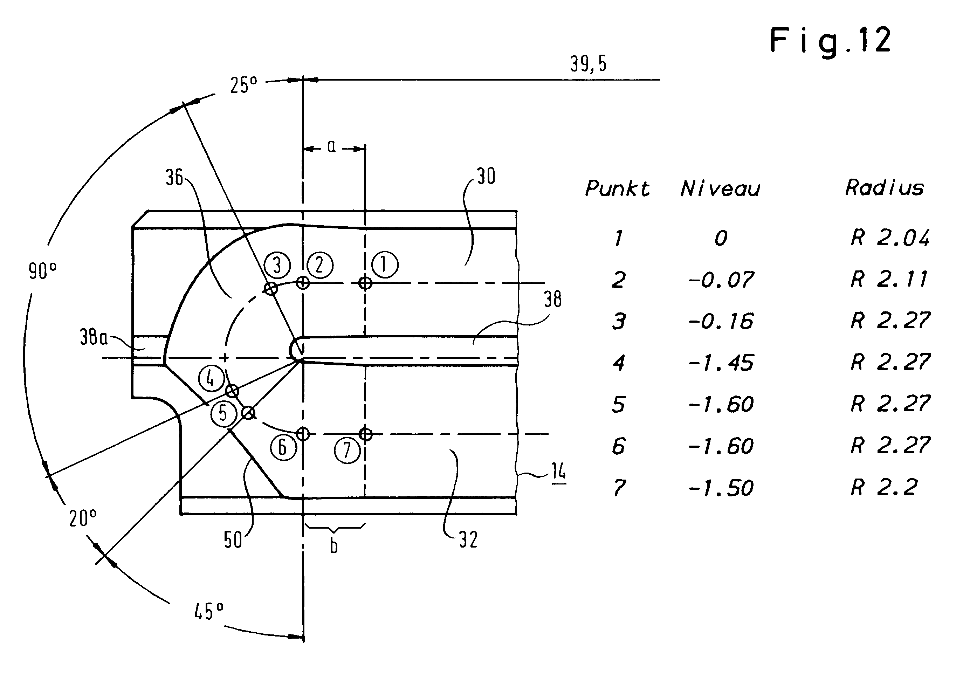

In Figur 12 sind mit ① bis ⑦ verschiedene Meßpunkte bezeichnet, die teilweise auch in Figur 7 eingetragen wurden, um die Relationen zwischen Figur 7 und 12 klar zu machen. Diesen Meßpunkten sind nach der Tabelle der Figur 12 verschiedene Niveauwerte beispielshalber zugeordnet. Die Niveauwerte bezeichnen die relative Niveauhöhe in Millimeter jeweils auf der Sohle der Laufbahn gegenüber dem Sohlenniveau des tragenden Laufbahnabschnitts 30, welches mit Null bewertet ist.

Man erkennt aus der zweiten Spalte der Tabelle ohne weiteres, daß im Bereich ⑤ bis ⑥ ein Niveauminimum vorliegt, und daß von diesem Niveauminimum aus ein Anstieg des Niveaus bis auf die Niveauhöhe der Sohle des rückführenden Geradlaufbahnabschnitts 32 stattfindet. Der Wiederanstieg ⑥ bis ⑦ liegt im wesentlichen in der Rücklaufgeraden des rückführenden Geradlaufbahnabschnitts 32. Den einzelnen Punkten ① bis ⑦ zugeordneten Ortskoordinaten sind durch die Winkelwerte in der Figur 12 bezeichnet. Die Figur 12 vermittelt durch die Längenangabe 39,5 mm auch eine Größenordnungsvorstellung von der Länge der Kugelbüchse. Ergänzend hierzu sei bemerkt, daß der Außendurchmesser des Käfigs 12 im Beispielsfall 40 mm beträgt, daß insgesamt 10 Laufplatten vorgesehen sind, wie in Figur 2 dargestellt, daß die periphere Erstreckung einer Laufplatte 9,7 mm beträgt,und daß der Kugeldurchmesser 3,969 mm beträgt. Schließlich beträgt der Krümmungsradius der Laufbahn an der Sohle gemessen (strichpunktierte Linie in Figur 12) 2,04 mm. In der Tabelle sind schließlich in der vierten Spalte die jeweiligen Radien der Laufbahnabschnitte in Millimetern aufgezeichnet. Man erkennt, daß diese Radien wenig größer sind als der Kugelradius, so daß die Kugeln seitlich geführt sind. Aus der Figur 12 und der Tabelle erkennt man, daß im Bereich ① bis ④ eine Seitenführung gewährleistet ist; diese Seitenführung ist im Scheitelbereich ④ durch den Fortsatz 38a der Rippe 38 ergänzt. Auch in dem relativ unkritischen Bereich ④ bis ⑦ ist noch eine gewisse Seitenführung der Kugeln durch die Laufplatte gewährleistet, wie durch die Verschneidungslinie 50 angedeutet. Es sei noch einmal erwähnt, daß die einzelnen Gefällsstrecken von ① bis ⑦ im wesentlichen stetig ineinander übergehen.

Die Führung der Kugeln ist durch den Käfig 12 ergänzt. Die Führungsflächen in dem Käfig 12 sind mit hoher Präzision so gefertigt, daß sie an die Führungsflächen der Laufplatten versatzlos anschliessen.

Die in den Figuren 3 und 7 erkennbaren Aussparungen 52 dienen zum Teil der Materialaufnahme beim Prägen der Bogenlaufbahnabschnitte 36; anders ausgedrückt: Beim Prägen werden die Laufplatten 14 mit vorher gebildeten Aussparungen in Prägeformen eingelegt, welche der Außenumfangsfläche 16 und den Endflächen anliegen, jedoch im Bereich der Aussparungen 52 so viel Luft lassen, daß das beim Prägen verdrängte Material einfließen kann und dabei die Geometrie der Aussparungen gemäß Figur 7 entsteht.

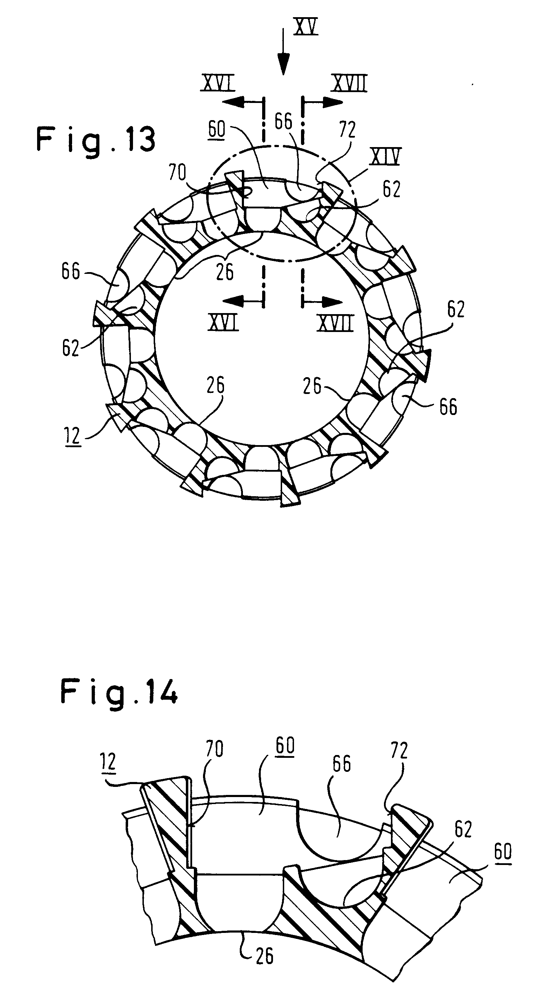

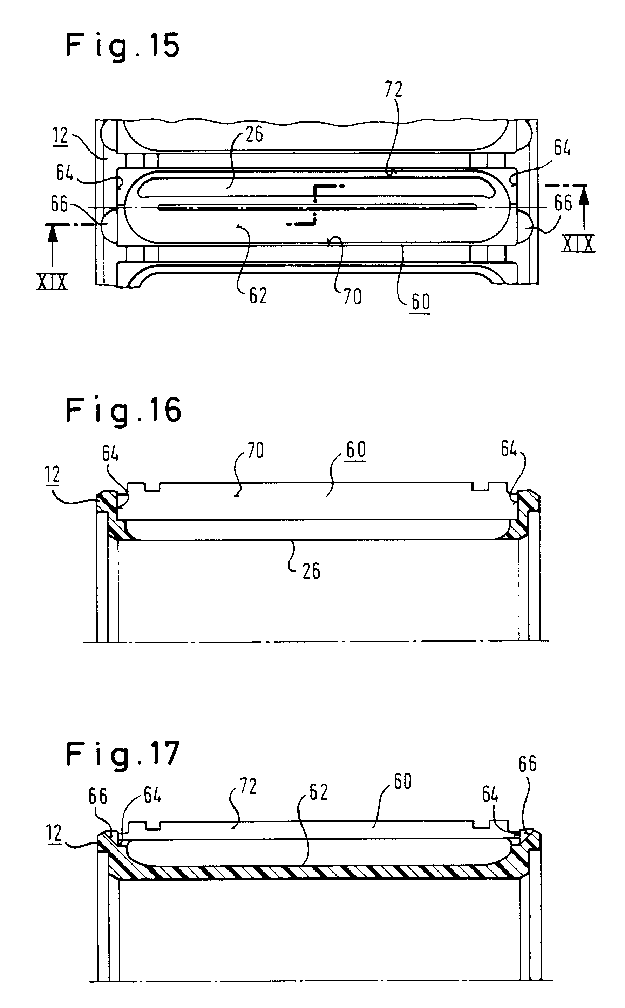

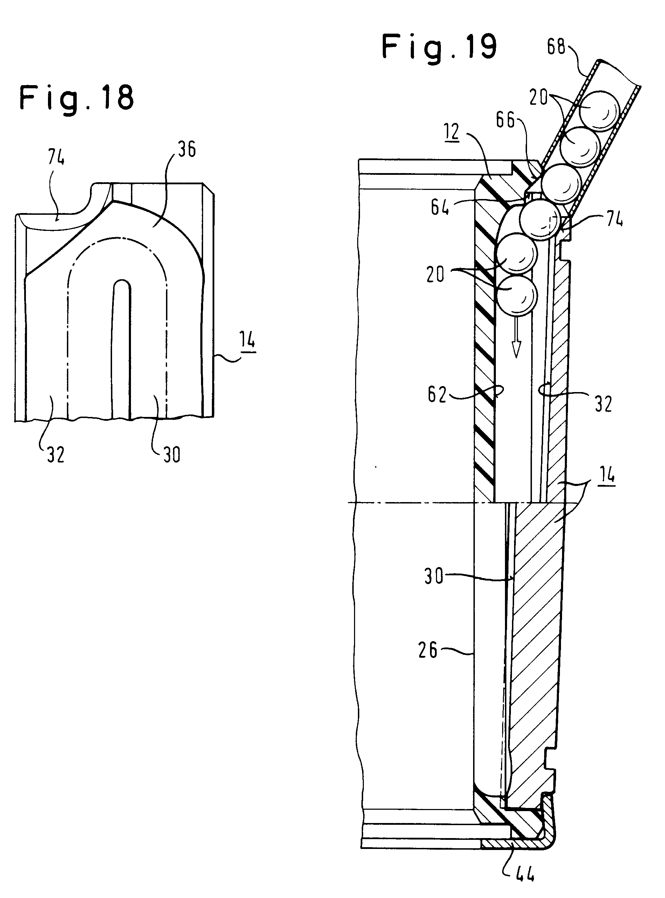

In Figur 13 ist der Käfig gemäss Figur 2 nach Entnahme der Laufplatten 14 und der Kugeln 20 dargestellt. Man erkennt dort die Ausnehmungen 60 für die Aufnahme der Laufplatten 14 der Figur 2. Man erkennt weiter die Schlitze 26, welche den Kugeln der Tragkugelreihe (22) teilweisen Durchtritt gewähren und man erkennt die Laufbahn 62 für die Rücklaufkugelreihe 24 der Figur 2. Dies alles ist in Vergrösserung auch in Figur 14 dargestellt. Man erkennt weiter aus den Figuren 14 und 15, dass an den Enden der Ausnehmungen 60, und zwar angrenzend an die Endflächen 64 der Ausnehmungen 60 in Flucht mit den Laufbahnen 62 rinnenförmige Füllschrägen 66 angeordnet sind, deren Bedeutung insbesondere aus Figur 19 zu ersehen ist. Dort wird zum Einfüllen der Kugeln 20 eines Kugelumlaufs ein Füllrohr 68 angesetzt, so dass es annähernd in Fortsetzung der jeweiligen Füllschräge 66 steht. Dabei ist der obere topfförmige Endring 44 abgenommen, während der untere topfförmige Endring 44 seine Sicherungsposition bezüglich der Laufplatten 14 einnimmt. Da der obere Endring 44 fehlt, kann die Laufplatte 14, wie aus Figur 19 zu ersehen, schräggestellt werden, so dass sie im Bereich der Einlaufschräge 66 den Kugeln 20 Einlass gewährt. Das Schrägstellen der Laufplatten 14 ist möglich, da die Längsbegrenzungsflächen 70, 72 der Ausnehmung 60 annähernd zueinander parallel sind, oder aber das Kunststoffmaterial des Käfigs 12 derart elastisch ist, dass ein Ausstellen der Laufplatte 14 unter Zwang möglich ist.

Das Einfüllen der Kugeln 20 in die Laufbahn 62 der Rücklaufkugelreihe wird noch dadurch erleichtert, dass an der Innenseite der Laufplatte 14, wie aus Figuren 18 und 19 ersichtlich, eine Abschrägung 74 angebracht ist.

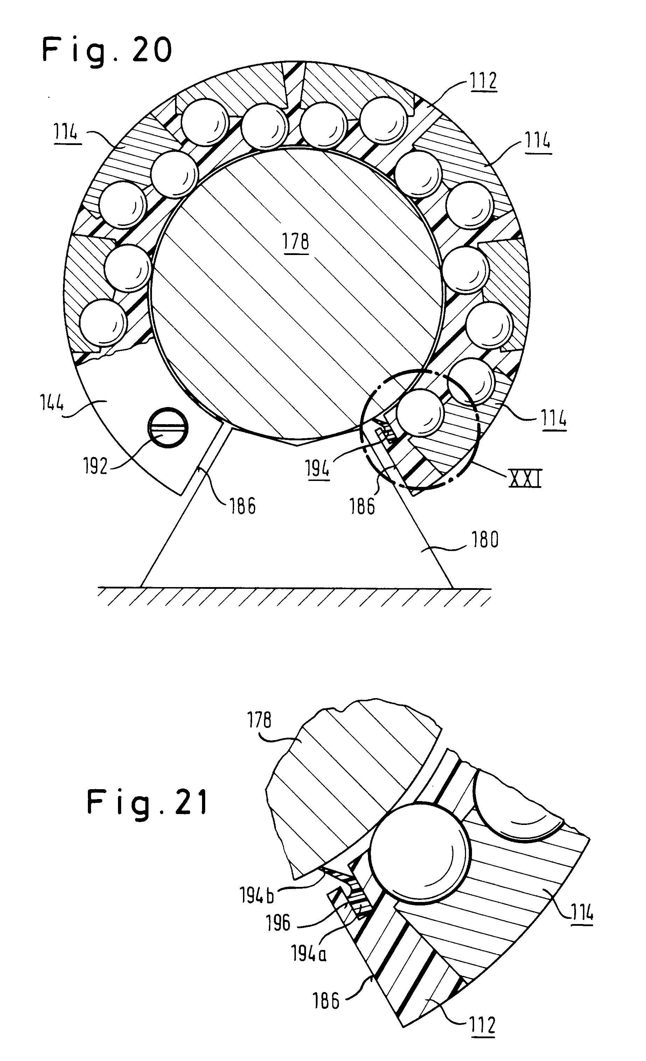

In Figur 20 erkennt man ein Linearkugellager, bei dem die Welle 178 durch Ständer 180 unterstüzt und der Käfig 112 teilringförmig ausgebildet ist. Der Käfig ist an seinen Enden wieder mit Endringen 144 versehen, welche entsprechend der Umfangserstreckung des Käfigs 112 teilringförmig ausgebildet sind. Zur Verhinderung des Eindringens von Schmutz in den Bereich der Kugeln sind Dichtungen vorgesehen.

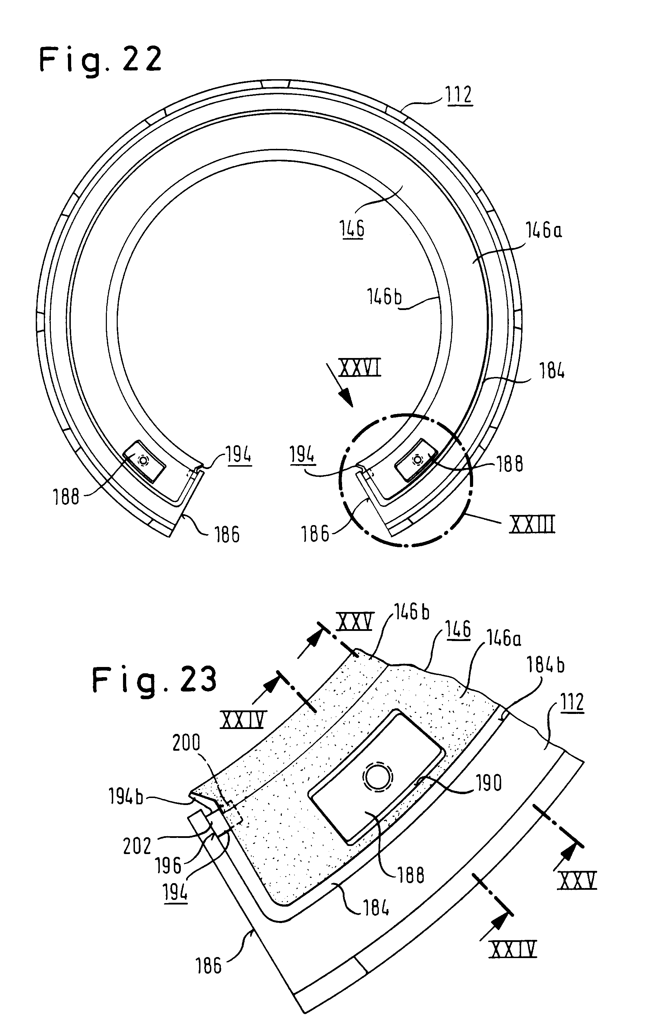

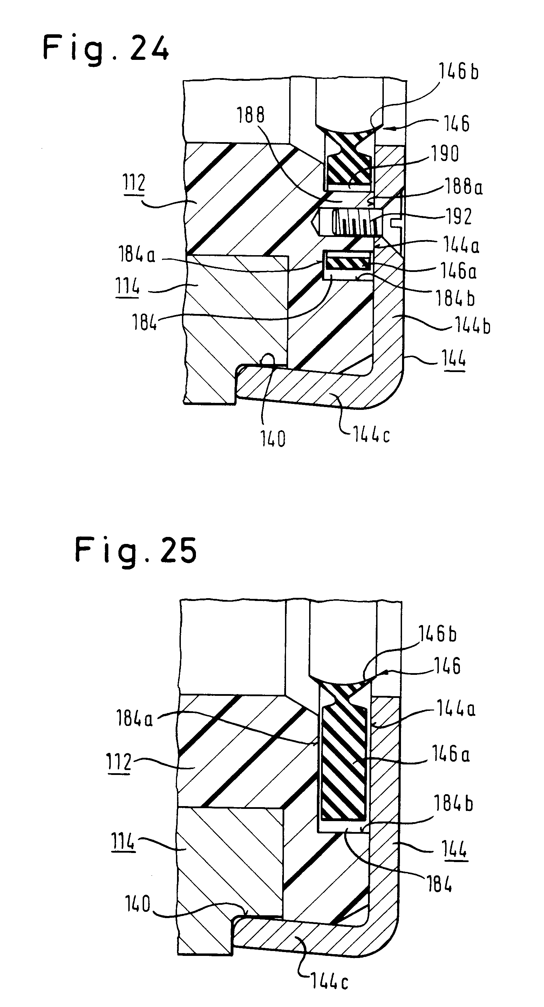

In Figur 1 war auf die Abschlußscheiben 46 hingewiesen worden. Dies sind dort die notwendigen Ringdichtungen, die am Käfig durch Endringe 44 gehalten sind und mit einer Dichtlippe an der dort nicht eingezeichneten Welle zur Anlage kommen. Dieser Dichtringe bedarf es auch bei der nunmehr diskutierten Ausführungsform nach Figur 20 und man erkennt diese Dichtringe in den Figuren 22 bis 25, wo sie mit 146 bezeichnet sind und sich zusammensetzen aus einem jeweiligen Grundkörper 146a und einer Dichtlippe 146b. Die Dichtlippe 146b ist auch hier wieder zur Anlage an der Welle 178 der Figur 20 bestimmt. Der Grundkörper 146a des Dichtrings 146 ist dabei, wie insbesondere aus Figur 25 zu ersehen, in einer Ringausnehmung 184 aufgenommen, welche durch eine axial gerichtete Fläche 184a und eine radial einwärts gerichtete Fläche 184b definiert ist. Der Grundkörper 146a liegt mit axialem Spiel zwischen der axial gerichteten Fläche 184a des Käfigs 112 und einer axial gerichteten Fläche 144a des Endrings 144. Das Übermaß der Ausnehmung 184 gegenüber dem Durchmesser des Grundkörpers 146a (Figur 25) gewährt dem Grundkörper 146a radiales Spiel innerhalb der Ausnehmung 184. Dieses radiale Spiel besteht auch bei der Ausführungsform nach Figur 1, ist auch dort von wesentlicher Bedeutung, ist aber dort bisher nicht erwähnt worden. Das radiale Spiel ist notwendig, um bei einer Winkelverstellung der Welle 178 gegenüber dem Käfig 112 eine Anpassung des Dichtungsrings 146 an die veränderte Geometrie zu ermöglichen. Während nun bei der Ausführungsform nach den Figuren 1 bis 13 der Dichtungsring 46 (dort als Abschlussscheibe bezeichnet) kreisförmig geschlossen ist und deshalb in peripherer Richtung beweglich sein darf, ohne dass dies den Lagerbetrieb stört, sind erfindungsgemäss die Dichtungsringe 146 teilringförmig d.h. offen. Es besteht nach wie vor die Notwendigkeit, den Dichtungsringen 146 radiales Spiel zu gestatten, um ihre Anpassung an veränderte Lagergeometrie bei Fluchtverlust zwischen Welle 178 und Käfig 112 zu ermöglichen. Es besteht aber gleichzeitig die Notwendigkeit, eine Verdrehung der Dichtungsringe 146 zu vermeiden, da diese Dichtungsringe 146 im Fall einer Verdrehungsmöglichkeit über die eine oder andere Endfläche 186 des Käfigs (siehe Figur 22) hervortreten bzw. hinter diese zurücktreten könnten.

Um den Dichtungsring 146 in radialer Richtung beweglich zu lassen, ihn in peripherer Richtung aber festzulegen, ist eine Ausbildung vorgesehen, wie sie in Figuren 23 u.24 im Detail dargestellt ist. Über der axialgerichteten Fläche 184a erheben sich Nocken 188, die auch in Figuren 22 und 23 erkennbar sind. Diese Nocken 188 durchsetzen Durchbrechungen 190, wie aus Figuren 23 und 24 zu ersehen. Dabei haben die Durchbrechungen 190 ein radiales Übermaß gegenüber der Radialbreite der Nocken 188, so dass die Dichtungsringe 146 nach wie vor ein radiales Spiel besitzen. Dabei ist zu beachten, dass gemäss Figur 22 die Nocken 188 lediglich in den Endbereichen des Dichtungsrings 146, also nahe den Stützlagern 180 der Figur 20, angebracht sind. Weiter ist zu beachten, dass die Höhe der Nocken 188 gegenüber der axial gerichteten Fläche 184a des Käfigs 112 grösser ist als die axiale Stärke des jeweiligen Grundkörpers 146a. Die Fläche 144a, also die Innenseite des Topfbodens 144b des topfförmigen Endrings 144 liegt gegen die Endfläche 188a des jeweiligen Nockens 188 an und ist dort mit dem Käfig verschraubt. Die Verschraubung erfolgt mittels einer Senkschraube 192, die in den Nocken 188 eingeschraubt ist. Wegen des Übermaßes der axialen Höhe des Nockens 188 gegenüber der axialen Dicke des Grundkörpers 146 wird auch bei straffem Anziehen der Senkschraube 192 der Grundkörper 144a nicht zwischen den Flächen 184a und 144a eingeklemmt. Auch insoweit bleibt also das radiale Spiel des Dichtungsrings 146 erhalten. Gemäss Figur 24 lässt sich auch gut erkennen, dass die Ringwand 144c in die Ausdrehungen 140 der Laufplatten 114 eingreift und daneben in entsprechende Ausdrehungen des Käfigs 112, so dass die Laufplatten 114 in dem Käfig axial und radial gehalten sind.

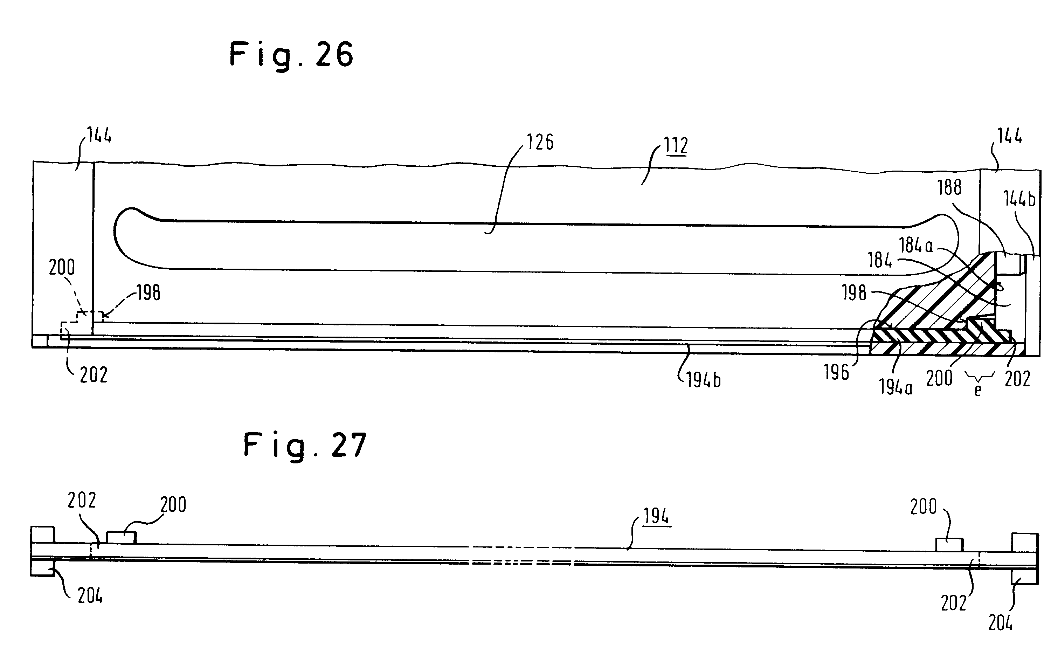

Mit den Ringdichtungen 146 allein ist das Dichtungsproblem noch nicht gelöst. Wie aus den Figuren 20 bis 23 sowie 26 und 27 ersichtlich, sind im Bereich der Spaltbegrenzungsflächen 186 in dem Käfig 112 auch Längsdichtungsleisten 194 mit einem Wurzelteil 194a und einem an der Welle 178 anliegenden Zungenteil 194b vorgesehen.
Der Wurzelteil 194a ist in einer axial verlaufenden und radial einwärts offenen Nut 196 des Käfigs 112 nahe dessen jeweiliger Spaltbegrenzungsfläche 186 eingesetzt. Die Nuten 196 erstrecken sich jeweils bis zu den axialgerichteten Flächen 184a und sind in ihren Endabschnitten e peripher erweitert, so dass Stützschultern 198 gebildet sind (Figur 26). Die Wurzelteile 194a der Längsdichtungsleisten 194 weisen in den axialen Endbereichen peripher vorspringende Vorsprünge 200 auf, die sich gegen die Stützschultern 198 anlegen. Die Längsdichtungsleisten 194 besitzen Fortsätze 202, welche über die Vorsprünge 200 hinaus axial in Richtung auf die Bodenwand 144b des Endrings 144 vorstehen, so dass, wie in Figur 23 dargestellt, der Dichtungsring 146 an dem Fortsatz 202 zur Anlage kommt. Durch das gegenseitige Anliegen der Fortsätze 202 und der Dichtungsringe 146 im Bereich des Spalts 184-186 ist der Zwischenraum zwischen der Welle 178 und dem Käfig 112 vollständig abgedichtet.

Die Figur 27 lässt die Längsdichtungsleiste 194 vor der Montage erkennen. Axial ausserhalb der Vorsprünge 200 sind an den beiden Enden einer Längsdichtungsleiste 194 Griffelemente 204 angebracht, die es bei der Montage der Längsdichtungsleisten 194 ermöglichen, deren zwischen den Vorsprüngen 200 gelegene Abschnitte so zu dehnen, dass die Vorsprünge 200 über die Schulterflächen 198 vorgeschoben und auf diesen aufgelagert werden können. Nach erfolgter Montage werden die Griffelemente 204 ausserhalb der Fortsätze 202 unter Belassung der Fortsätze 202 abgetrennt.

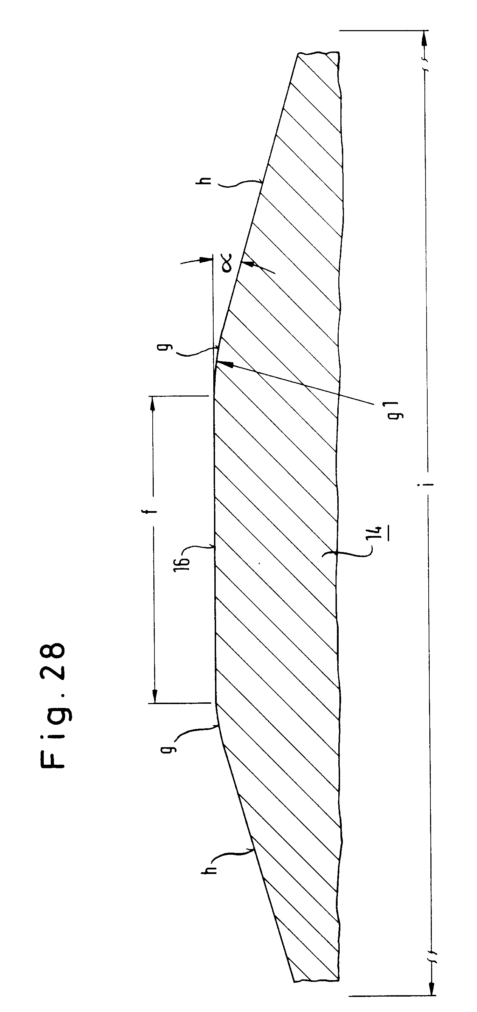

In Figur 28 erkennt man eine Laufplatte 14 wieder, deren Aussenfläche 16 in Figur 6 bereits schematisch angedeutet worden ist. Die Aussenfläche 16 weist einen mittleren geradlinig verlaufenden Längsabschnitt f auf, an den sich über Übergangsrundungen g mit einem Krümmungsradius g1 jeweils ein axialer Längsabschnitt h anschliesst, der ebenfalls geradlinig ist. Der Längsabschnitt h schliesst mit dem Längsabschnitt f einen Winkel α von 35 Winkelminuten ein. Die Gesamtlänge der tragenden Kugelreihe ist mit i bezeichnet. Bezüglich der Grössenverhältnisse gilt folgendes:

Die Länge i der Tragkugelreihe beträgt ca. 100 % bis ca. 200 %, vorzugsweise ca. 130 % bis ca. 180 % des Durchmessers der Welle 178; die Länge des mittleren Längsabschnitts f beträgt ca. 2 % bis ca. 15 %, vorzugsweise ca. 5 % bis ca. 10 % des Durchmessers der Welle 178; der Krümmungsradius g1 der Übergangsrundung g beträgt mehr als ca. 100 %, vorzugsweise mehr als ca. 150 % und beispielsweise 167 % bis 300 % des Durchmessers der Welle 178. Die Winkelneigung α beträgt ca. 25 bis 45 Winkelminuten, im Beispielsfall ca. 35 Winkelminuten.

Es hat sich gezeigt, dass bei Einhaltung der genannten Maße noch eine gewisse Kipp- oder Schaukelfähigkeit der Laufplatten 14 gewährleistet ist, andererseits aber im Normalbetrieb durch die Geradlinigkeit im mittleren Längsbereich f die Flächenpressung gegenüber einer umschliessenden Lagerbohrung soweit reduziert ist, dass der Verschleiß klein bleibt. Es hat sich weiter gezeigt, dass bei Einhaltung der angegebenen Maße im Bereich der bei Fluchtverlust zwischen Wellenachse und Käfigachse zu erwartenden Kippbewegungen die Annäherung diametral einander gegenüberliegender Laufplatten 14 innerhalb akzeptabler Grenzen bleibt und damit auch der Druck, den die Kugeln gegen die Welle 178 einerseits und gegen die Laufplatten 14 andererseits ausüben. Die Ausführungsform der Laufplatten nach Figur 28 ist bei allen Ausführungsformen des Linearkugellagers wie vorstehend beschrieben und darüber hinaus anwendbar.

Es ist zu beachten, dass die Laufplatten an ihrer Aussenfläche 16, wie in Figur 2 dargestellt, entsprechend der Innenumfangsfläche einer aufnehmenden Lagergehäusebohrung gerundet sind, so dass eine flächige Anlage der Laufplatten im Bereich des mittleren Längsabschnitts f an der Lagergehäusebohrung gewährleistet ist.

## Patentansprüche

1. Linearkugelbüchse (10) umfassend einen Käfig (12) mit einer Käfigachse und mit einer Mehrzahl von Kugelumläufen,
wobei jeder Kugelumlauf zwei zur Käfigachse im wesentlichen parallele Geradkugelreihen (22, 24), nämlich eine Tragkugelreihe (22) und eine Rücklaufkugelreihe (24) und zwei die beiden Geradkugelreihen (22, 24) verbindende Bogenkugelreihen (28) aufweist,
wobei weiter jeder der Kugelumläufe längs einer geschlossenen Laufbahn nach radial außen an der Innenfläche einer Laufplatte (14) anliegt, welche in eine zugehörige Ausnehmung des Käfigs (12) eingesetzt ist und eine Außenfläche (16) zur Anlage an einer Innenumfangsfläche einer den Käfig (12) aufnehmenden Lagergehäusebohrung besitzt,
wobei weiter die geschlossene Laufbahn (30, 32, 36) zwei Geradlaufbahnabschnitte (30, 32), nämlich einen tragenden Geradlaufbahnabschnitt (30) für die Tragkugelreihe (22) und einen rückführenden Geradlaufbahnabschnitt (32) für die Rücklaufkugelreihe (24) und zwei die Geradlaufbahnabschnitte (30, 32) verbindende Bogenlaufbahnabschnitte (36) aufweist,
wobei weiter der tragende Geradlaufbahnabschnitt (30), bezogen auf die Außenfläche der Laufplatte (14), auf einem höheren und der rückführende Geradlaufbahnabschnitt (32), bezogen auf die Außenfläche (16) der Laufplatte (14), auf einem tieferen Niveau liegt und die Bogenlaufbahnabschnitte (36) die entsprechenden Niveauunterschiede allmählich überwinden,
wobei weiter die Geradlaufbahnabschnitte (30, 32) durch eine Mittelrippe (38) voneinander getrennt sind und
wobei die jeweilige Tragkugelreihe (22) nach radial innen einen Schlitz (26) des Käfigs (12) teilweise durchdringt, um an einer von dem Käfig (12) umschlossenen Welle Anlage nehmen zu können und die jeweilige Rücklaufkugelreihe (24) nach radial innen durch den Käfig (12) abgestützt ist,
dadurch gekennzeichnet,
daß die Mittelrippe bis an die Enden der Laufplatte (14) hin im wesentlichen profilkonstant fortgesetzt (Fortsätze 38a) und von den Bogenlaufbahnabschnitten (36) durchquert ist, und daß Verlängerungen (30a, 32a) der beiden Geradlaufbahnabschnitte (30, 32) bis an die Enden der Laufplatte (14) im wesentlichen profilkonstant fortgesetzt sind unter Verschneidung mit den Bogenlaufbahnabschnitten (36).

2. Linearkugelbüchse nach Anspruch 1,
dadurch gekennzeichnet,
daß die Bogenlaufbahnabschnitte (36) durch Prägung gebildet sind.

3. Linearkugelbüchse nach einem der Ansprüche 1 oder 2,
dadurch gekennzeichnet,
daß von den Geradlaufbahnabschnitten (30, 32) zumindest der tragende Geradlaufbahnabschnitt (30) geschliffen ist.

4. Linearkugelbüchse nach einem der Ansprüche 1 bis 3,
dadurch gekennzeichnet,
daß der Niveauabfall (① - ②) der Laufbahn von dem Niveau des tragenden Geradlaufbahnabschnitts (30) in Richtung auf das Niveau des rückführenden Geradlaufbahnabschnitts (32) jeweils im Bereich geradliniger Endfortsätze (a) des tragenden Geradlaufbahnabschnitts (30) beginnt.

5. Linearkugelbüchse nach einem der Ansprüche 1 bis 4,
dadurch gekennzeichnet,
daß die Laufbahn jeweils im Übergangsbereich zwischen den Bogenstrecken der Bogenlaufbahnabschnitte (36) und der Rücklaufgeraden des rückführenden Geradlaufbahnabschnitts (32) ein Niveauminimum (⑤ - ⑥) durchläuft.

6. Linearkugelbüchse nach Anspruch 5,
dadurch gekennzeichnet,
daß die Laufbahn im Bereich geradliniger Endfortsätze (b) des rückführenden Geradlaufbahnabschnitts (32) von dem jeweiligen Niveauminimum (⑤ - ⑥) auf das Niveau (⑦) des rückführenden Geradlaufbahnabschnitts (32) allmählich ansteigt.

7. Linearkugelbüchse nach einem der Ansprüche 1 bis 6,
dadurch gekennzeichnet,
daß die Geradlaufbahnabschnitte (30,32) und/oder Bogenlaufbahnabschnitte (36) einen Rillenquerschnitt besitzen, dessen Krümmungsradius annähernd gleich, vorzugsweise geringfügig größer, ist wie der Kugelradius.

8. Linearkugelbüchse nach einem der Ansprüche 1 bis 7,
dadurch gekennzeichnet,
daß die Laufplatten (14) an der Innenumfangsfläche der den Käfig (12) aufnehmenden Lagergehäusebohrung schaukelnd anliegen, und zwar um eine Schaukelachse, welche in einer zur Käfigachse senkrechten Ebene annähernd tangential zur Käfigachse liegt, und zwar vorzugsweise im Bereich der Längsmitte der Kugelbüchse (10).

9. Linearkugelbüchse nach Anspruch 8,
dadurch gekennzeichnet,
daß die Außenfläche (16) der Laufplatte (14) von einem im Bereich der Schaukelachse gelegenen Mittelbereiche (VI) zu den Enden der Laufplatte (14) hin bezüglich der Käfigachse radial einwärts abfällt.

10. Linearkugelbüchse (10) nach einem der Ansprüche 8 oder 9,
dadurch gekennzeichnet,
dass die Laufplatte (14) an ihrer Aussenfläche (16) einen mittleren Bereich (f) aufweist, welcher parallel zur Laufbahn (30) der Tragkugelreihe (22) verläuft und dass an diesen mittleren Längsbereich (f) über nach radial aussen konvexe Verrundungen (g) axial äussere Längsbereiche (h) anschliessen, welche nach axial aussen und radial innen vorzugsweise geradlinig verlaufen.

11. Linearkugelbüchse nach Anspruch 10,
dadurch gekennzeichnet,
dass die axiale Gesamtlänge (i) einer Tragkugelreihe ca. 100 % bis ca. 200 %, vorzugsweise ca. 130 % bis ca. 180 % des zugehörigen Wellendurchmessers beträgt,
dass die axiale Länge des mittleren Längsbereichs (f) ca. 2 % bis ca. 15 % des zugehörigen Wellendurchmessers, vorzugsweise ca. 5 % bis ca. 10 % des zugehörigen Wellendurchmessers beträgt,
dass die Verrundung (g) einen Krümmungsradius (g1) besitzt, welcher mehr als 100 %, vorzugsweise mehr als 150 %, beispielsweise 167 % bis 300 % des zugehörigen Wellendurchmessers beträgt und
dass die Neigung der axial äusseren Längsbereiche (h) gegenüber der Laufbahn (30) der Tragkugelreihe (22) im Mittel ca. 25 bis ca. 45 Winkelminuten, vorzugsweise ca. 35 Winkelminuten beträgt.

12. Verfahren zur Herstellung einer Laufplatte (14) für eine Kugelbüchse (10), mit den folgenden Maßnahmen:
a) Es wird ein Profilstab bereitgestellt, welcher eine Außenfläche (16) und eine Innenfläche (18) besitzt, wobei an der Innenfläche (18) zwei zueinander parallele in Längsrichtung des Profilstabs verlaufende durch eine Mittelrippe (38) voneinander getrennte Geradrillen (30, 32) ausgebildet sind und wobei die eine (30) dieser Geradrillen (30, 32) ein höheres Niveau gegenüber der Außenfläche (16) und die andere Geradrille (32) ein niedrigeres Niveau gegenüber der Außenfläche (16) besitzt;
b) in die Innenseite (18) der Laufplatte (14) werden Bogenrillen (36) eingeprägt, welche die Mittelrippe (38) durch queren und die niveauhöhere Geradrille (30) mit der niveauniedrigeren Geradrille (32) niveauüberwindend verbinden.

13. Verfahren nach Anspruch 12,
dadurch gekennzeichnet,
daß mindestens eine der Geradrillen (30) nach dem Einprägen der Bogenrillen (36) geschliffen wird.

14. Verfahren nach einem der Ansprüche 12 oder 13,
dadurch gekennzeichnet,
daß in noch geradlinigen Endabschnitten (a) der niveauhöheren Geradrille (30) beim Prägen der Bogenrillenabschnitte (36) Gefällsstrecken (① - ②) mit eingeprägt werden.

15. Verfahren nach einem der Ansprüche 12 bis 14,
dadurch gekennzeichnet,
daß die Bogenrillen (36) in den Anschlußbereichen an die niveauniedrigere Geradrille (32) mit einer solchen Prägetiefe geprägt werden, daß sich dort Niveauminima (⑤ - ⑥) ergeben, die tiefer liegen als das Niveau der niveauniedrigeren Geradrille (32).

16. Verfahren nach Anspruch 15,
dadurch gekennzeichnet,
daß die Prägetiefe der Bogenrillen (36) im Anschlußbereich an die niveauniedrigere Geradrille (32) derart gewählt wird, daß die Niveauminima (⑤ , ⑥) auch nach dem Schleifen der niveauniedrigeren Geradrille (32) noch vorhanden sind.

17. Verfahren nach einem der Ansprüche 12 bis 16,
dadurch gekennzeichnet,
daß an den Enden des Profilstabs (14) Aussparungen (52) bereitgestellt werden, welche beim Prägen wenigstens einen Teil des verdrängt werdenden Laufplattenmaterials aufnehmen.

18. Verfahren nach einem der Ansprüche 12 bis 17,
dadurch gekennzeichnet,
daß die Außenfläche (16) vor oder nach dem Schleifen der Geradrillen (30, 32) geschliffen wird.

19. Verfahren nach einem der Ansprüche 12-18,
dadurch gekennzeichnet,
daß die Außenfläche (16) nach dem Schleifen der Geradrillen (30, 32) geschliffen wird, wobei die geschliffenen Geradrillen (30,32) zur Positionierung des Profilstabs (14) beim Schleifen der Außenfläche (16) verwendet werden.

20. Verfahren nach einem der Ansprüche 12-19,
dadurch gekennzeichnet, daß die Außenfläche (16) als Schaukelfläche ausgebildet wird.

21. Verfahren nach Anspruch 20, dadurch gekennzeichnet,
daß die Schaukelfläche (16) mit einem mittleren (f) Längsbereich geformt wird, welcher parallel zur Laufbahn (30) der Tragkugelreihe (22) verläuft, und daß an diesen mittleren Längsbereich (f) anschließend nach radial außen konvexe Verrundungen (g) und an diese wiederum anschließend axial äußere Längsbereiche (h) geformt werden, welche nach axial außen und radial innen vorzugsweise geradlinig verlaufen.

22. Verfahren nach Anspruch 21,
dadurch gekennzeichnet,
dass die axiale Gesamtlänge (i) einer Tragkugelreihe mit ca. 100 % bis ca. 200 %, vorzugsweise ca. 130 % bis ca. 180 % des zugehörigen Wellendurchmessers bemessen wird,
dass die axiale Länge des mittleren Längsbereichs (f) mit ca. 2 % bis ca. 15 % des zugehörigen Wellendurchmessers, vorzugsweise ca. 5 % bis ca. 10 % des zugehörigen Wellendurchmessers bemessen wird,
dass die Verrundung (g) mit einen Krümmungsradius (g1) ausgeführt wird, welcher mehr als 100 %, vorzugsweise mehr als 150 %, beispielsweise 167 % bis 300 % des zugehörigen Wellendurchmessers beträgt und
dass die Neigung der axial äusseren Längsbereiche (h) gegenüber der Laufbahn (30) der Tragkugelreihe (22) so eingestellt wird, daß die Neigung im Mittel ca. 25 bis ca. 45 Winkelminuten, vorzugsweise ca. 35 Winkelminuten beträgt.

## Claims

1. Linear ball bush (10) comprising a cage (12) with a cage axis and having a plurality of ball circuits, where each ball circuit comprises two straight ball rows (22, 24) substantially parallel to the cage axis, namely a carrier ball row (22) and a return row (24), and two curved ball rows (28) connecting the two straight ball rows (22, 24) where furthermore each of the ball circuits rests radially outward on the along the inner face of a runner plate, which plate is inserted into a pertinent aperture of the cage (12) and possesses an external surface (16) for abutment on an internal circumferential surface of a bearing housing bore accommodating the cage (12),
where furthermore the closed track (30, 32, 36) comprises two straight track sections (30, 32), namely a carrier straight track section (30) for the carrier ball row (22) and a returning straight track section (32) for the returning ball row (24), and two curved track sections (36) connecting the straight track sections (30, 32),
where furthermore the carrier straight track section (30), in relation to the outer face of the runner plate (14), lies at a higher level and the returning straight track section (32), in relation to the outer surface (16) of the runner plate (14), lies at a lower level, and the curved track sections (36) gradually overcome the corresponding differences of level,
where furthermore the straight track sections (30, 32) are separated from one another by a middle rib (38), and where the carrier ball row (22) in each case partially radially inwardly penetrates a slot (26) of the cage (12), in order to be able to take abutment on a shaft enclosed by the cage (12), and the return ball row (24) in each case is radially inwardly supported by the cage (12),
characterised in that the middle rib is continued to the ends of the runner plate (14) substantially with constant section (continuations 38a) and is traversed by the curved track sections (36), and in that prolongations (30a, 32a) of the two straight track sections (30, 32) are continued with substantially constant section as far as the ends of the runner plate (14), intersecting with the curved track sections (36).

2. Linear ball bush according to Claim 1, characterised in that the curved track sections (36) are formed by swaging.

3. Linear ball bush according to one of Claims 1 or 2, characterised in that of the straight track sections (30, 32) at least the carrying straight track section (30) is ground.

4. Linear ball bush according to one of Claims 1 to 3, characterised in that the level fall-off (1) - (2) of the track from the level in each case of the carrying track straight section (30) in the direction of the returning straight track section (32) begins in each case in the region of rectilinear end extensions (a) of the carrying straight track section (30).

5. Linear ball bush according to any one of Claims 1 to 4, characterised in that the track travels in each case, in the transition zone between the curved sections of the curved track sections (36) and the straight returns of the returning straight track section (32), through a level minimum (5) - (6).

6. Linear ball bush according to Claim 5, characterised in that the track rises gradually in the region of rectilinear end extensions (b) of the returning straight track section (32), from the respective level minimum (5) - (6) to the level (7) of the returning straight track section (32).

7. Linear ball bush according to one of Claims 1 to 6, characterised in that the straight track sections (30, 32) and/or curved track sections (36) possess a channel cross-section, the radius of curvature of which is approximately equal to, or preferably slightly greater than, the ball radius.

8. Linear ball bush according to one of Claims 1 to 7, characterised in that the runner plates (14) rest in swinging manner on the inner circumferential surface of the bearing housing bore receiving the cage (12), namely about a swinging pivot which lines in a plane perpendicular to the cage axis, approximately tangential to the cage axis, namely preferably in the region of the middle of the length of the ball bush (10).

9. Linear ball bush according to Claim 8, characterised in that the outer face (16) of the runner plate (14) falls away radially inward, from a middle region (VI) placed in the region of the swing axis towards the ends of the runner plate (14), in relation to the cage axis.

10. Linear ball bush according to one of Claims 8 or 9, characterised in that the runner plate (14) has on its outer surface (16) a middle region (f) which proceeds parallel to the track (30) of the carrier ball row (22) and in that this middle longitudinal region (f) is adjoined by way of radially outwardly convex roundings (g) by axially outer longitudinal regions (h) which extend preferably rectilinearly axially outwards and radially inwards.

11. Linear ball bush according to Claim 10, characterised in that the axial total length (i) of a carrier ball row amount to about 100% to app. 200%, preferably app. 130% to app. 180% of the pertinent shaft diameter,
in that the axial length of the middle length region (f) amounts to about 2% to about 15% of the pertinent shaft diameter, preferably app. 5% to app. 10% of the pertinent shaft diameter, in that the rounding (g) possesses a radius (g1) of curvature which amounts to more than 100% preferably more than 150%, for example 167% to 300% of the pertinent shaft diameter, and
in that the inclination of the axially outer longitudinal regions (h) in relation to the track (30) of the carrier ball row (22) amounts on average to app. 25 to app. 45 minutes of angle, preferably app. 35 minutes of angle.

12. Method for the production of a runner plate (14) for a ball bush (10) with the following features:
a) a profiled bar is prepared which possesses an outer surface (16) and an inner surface (18), while on the inner surface (18) there are formed two mutually parallel straight channels (30, 32) extending in the longitudinal direction of the profiled bar and separated from one another by a middle rib (38), the one (30) of these straight channels (30, 32) possessing a higher level and the other straight channels (32) possessing a lower level, in relation to the outer surface (16);
b) curved channels (36) are swaged into the inside (18) of the runner plate (14), which traverse the middle rib (38) and connect the straight channel (30) of higher level with the straight channel (32) of lower level, in level-overcoming manner.

13. Method according to Claim 12, characterised in that at least one of the straight channels (30) is ground after the swaging-in of the curved channels (36).

14. Method according to one of Claims 12 or 13, characterised in that gradient sections (1) - (2) are impressed into still rectilinear end sections (a) of the straight channel (30) of higher level in the swaging of the arcuate channel sections (36).

15. Method according to one of Claims 12 to 14, characterised in that the curved channels (36) are impressed in the regions adjoining the straight channel (32) of lower level with such a swaging depth that minima of level (5) - (6) result there which lie lower than the level of the straight channel (32) of lower level.

16. Method according to Claim 15, characterised in that the depth of impression of the curved channels (36) in the region adjoining the straight channel (32) of lower level is so selected that the minima of level (5), (6) are still present even after the grinding of the straight channel (32) of lower level.

17. Method according to one of Claims 12 to 16, characterised in that at the ends of the profiled bar (14) recesses (52) are made ready which in swaging accommodate at least a part of the runner plate material which is displaced.

18. Method according to one of Claim 12 to 17, characterised in that the outer surface (16) is ground before or after the grinding of the straight channels (30, 32).

19. Method according to one of Claims 12 to 18, characterised in that the outer surface (16) is ground after the grinding of the straight channels (30, 32), the ground straight channels being used for the positioning of the profiled bar (14) in the grinding of the outer surface (16).

20. Method according to one of Claims 12 to 19, characterised in that the outer surface (16) is formed as swinging surface.

21. Method according to Claim 20, characterised in that the swinging surface (16) is shaped with a middle longitudinal region (f) which is parallel to the runner track (30) of the carrier ball row (22) and in that adjoining this middle longitudinal region (f) there are formed radially outwardly convex roundings (g) and again adjoining these, axially outer longitudinal regions (h) are formed which have radially inward and axially outward preferably rectilinear courses.

22. Method according to Claim 21, characterised in that the axial total length (i) of a carrier ball row is dimensioned with app. 100% to app. 200%, preferably app. 130% to app. 180% of the pertinent shaft diameter,
in that the axial length of the mean length range (f) is dimensioned with app. 2% up to 15% of the pertinent shaft diameter, preferably app. 5% to app. 10% of the pertinent shaft diameter, in that the rounding (g) is made with a radius (g1) of curvature which preferably amounts to more than 100%, preferably more than 150%, for example 167% to 300% of the pertinent shaft diameter and in that the inclination of the axially outer longitudinal zones (h) in relation to the runner track (30) of the carrier ball row (22) is so adjusted that the inclination amounts on average to app. 25 to app. 45 minutes of angle, preferably app. 35 minutes of angle.

## Revendications

1. Douille à billes linéaire (10), comprenant une cage (12) avec un axe de cage et une pluralité de circuits de billes,
dans laquelle chaque circuit de billes présente deux rangées droites de billes (22,24), sensiblement parallèles à l'axe de cage, notamment une rangée de billes porteuse (22) et une rangée de billes de retour (24) et deux rangées de billes arquées (28), reliant les deux rangées droites de billes (22,24),
dans laquelle, en outre, chacun des circuits de billes appuie, le long d'une piste de roulement fermée, dans la direction radiale extérieure, sur la face intérieure d'une plaque de roulement (14), insérée dans un évidement associé de la cage (12) et une face extérieure (16), en vue de constituer un appui sur la surface périphérique intérieure d'un alésage de carter de palier, recevant la cage,
dans laquelle, en outre, la piste de roulement fermée (30,32,36) présente deux tronçons de piste de roulement droite (30,32), notamment un tronçon de piste de roulement droite (30) à fonction porteuse, pour la rangée de billes support (22) et un tronçon de piste de roulement droite (32) à fonction de retour, pour la rangée de billes de retour (24) et deux tronçons de piste de roulement arquée (36), assurant la liaison des tronçons de piste de roulement droite (30,32),
dans laquelle, en plus, le tronçon de piste de roulement droite (30) à fonction porteuse est situé à un niveau plus haut, par rapport à la surface extérieure de la plaque de roulement (14), et le tronçon de piste de roulement droite (30) à fonction de retour est situé à un niveau plus profond, par rapport à la surface extérieure (16) de la plaque de roulement (14), les tronçons de piste de roulement arquées (36) rattrapant progressivement les différences de niveau correspondantes,
dans laquelle, en outre, les tronçons de piste de roulement droite (30,32) sont séparés les uns des autres par une nervure médiane (38) et
dans laquelle chaque rangée de billes porteuse (22) traverse, radialement vers l'intérieur, une fente (26) de la cage (12), afin de pouvoir prendre appui sur un arbre, entouré par la cage (12) et chaque rangée de billes de retour (24) est soutenue, radialement vers l'intérieur, par la cage (12),
caractérisée en ce que
la nervure médiane se prolonge jusqu'aux extrémités de la plaque de roulement (14), avec un profil sensiblement constant (prolongements 38a) et est traversée par les tronçons de piste de roulement droite (36), et en ce que des prolongements (30a,32a) des deux tronçons de piste de roulement droite (30,32) se prolongent jusqu'aux extrémités de la plaque de roulement (14), avec un profil sensiblement constant (prolongements 38a), en recoupant les tronçons de piste de roulement arquée (36).

2. Douille à billes linéaire selon la revendication 1, caractérisée en ce que les tronçons de piste de roulement arquée (36) sont formés par déformation.

3. Douille à billes linéaire selon la revendication 1 ou 2, caractérisée en ce que, parmi les tronçons de piste de roulement droite (30,32), au moins le tronçon de piste de roulement droite (30) à fonction porteuse est rectifié par meulage.

4. Douille à billes linéaire selon l'une des revendications 1 à 3, caractérisée en ce que la chute de niveau ( ① - ② ) de la piste de roulement commence du niveau du tronçon de piste de roulement droite (30) à fonction porteuse, en direction du niveau du tronçon de piste de roulement droite (32) à fonction de retour, chaque fois dans la zone des prolongements finaux (a) rectilignes du tronçon de piste de roulement droite (30) à fonction porteuse.

5. Douille à billes linéaire selon l'une des revendications 1 à 4, caractérisée en ce que la piste de roulement passe chaque fois par un niveau minimal ( ⑤ - ⑥ ), dans la zone de transition entre les chemins arqués des tronçons de piste de roulement arquée (36) et les droites de retour du tronçon de piste de roulement droite (32) à fonction de retour.

6. Douille à billes linéaire selon la revendication 5, caractérisée en ce que la piste de roulement monte progressivement, dans la zone des prolongements finaux (b) rectilignes du tronçon de piste de roulement droite (32) à fonction de retour, du niveau minimal ( ⑤ - ⑥ ) au niveau ( ⑦ ) du tronçon de piste de roulement droite (32) à fonction de retour.

7. Douille à billes linéaire selon l'une des revendications 1 à 6, caractérisée en ce que les tronçons de piste de roulement droite (30,32) et/ou les tronçons de piste de roulement arquée (36) comportent une section transversale en gorge, dont le rayon de courbure est sensiblement égal, de préférence légèrement supérieur, au rayon des billes.

8. Douille à billes linéaire selon l'une des revendications 1 à 7, caractérisée en ce que les plaques de roulement (14) appuient de façon basculante sur la surface périphérique intérieure de l'alésage de carter de palier recevant la cage (12), notamment autour d'un axe de basculement, situé dans un plan perpendiculaire à l'axe de cage, à peu près tangentiellement à l'axe de cage, et de préférence dans la zone de l'axe longitudinal de la douille à billes (10).

9. Douille à billes linéaire selon la revendication 8, caractérisée en ce que la surface extérieure (16) de la plaque de roulement (14) descend radialement vers l'intérieur, par rapport à l'axe de cage, depuis une zone médiane (VI) située dans la zone de l'axe de basculement, vers les extrémités de la plaque de roulement (14).

10. Douille à billes linéaire selon la revendication 8 ou 9, caractérisée en ce que la plaque de roulement (14) présente sur sa surface extérieure (16) une zone médiane (f), s'étendant parallèlement à la piste de roulement (30) de la rangée de billes porteuse (22) et en ce qu'à cette zone longitudinale médiane (f) se raccordent, par l'intermédiaire d'arrondis (g) à convexité tournée vers l'extérieur, des zones longitudinales (h) extérieures axialement qui s'étendent, de préférence rectilignes, axialement vers l'extérieur et radialement vers l'intérieur.

11. Douille à billes linéaire selon la revendication 10, caractérisée en ce que la longueur totale axiale (i) d'une rangée de billes porteuse est d'environ 100 % à environ 200 %, de préférence d'environ 130 % à environ 180 % du diamètre d'arbre correspondant,
en ce que la longueur axiale de la zone longitudinale médiane (f) est d'environ 2 % à environ 15 % du diamètre d'arbre correspondant, de préférence d'environ 5 % à environ 10 % du diamètre d'arbre correspondant, en ce que l'arrondi (g) présente un rayon de courbure (g1) supérieur à 100 %, de préférence supérieur à 150 %, par exemple de 167 % à 300 % du diamètre d'arbre correspondant et
en ce que l'inclinaison des zones longitudinales extérieures axialement (h), par rapport à la piste de roulement (30) de la rangée de billes porteuse (22) est en moyenne d'environ 25 à environ 45 minutes d'angle, de préférence d'environ 35 minutes d'angle.

12. Procédé de fabrication d'une plaque de roulement (14) pour une douille à billes (10), avec les dispositions suivantes :
a) il est préparé une barre profilée à surface extérieure (16) et surface intérieure (18), deux gorges droites (30,32), séparées l'une de l'autre par une nervure médiane (38), s'étendant parallèles dans la direction longitudinale de la barre profilée, étant réalisées sur la surface intérieure (18) et l'une (30) de ces gorges droites (30,32) présentant un niveau plus élevé par rapport à la surface extérieure (16) et l'autre gorge droite (32) présentant un niveau plus bas par rapport à la surface extérieure (16);
b) des gorges arquées (36) sont creusées par déformation, dans la face intérieure (18) de la plaque de roulement (14), en traversant la nervure médiane (38) et reliant, en rattrapant les différences de niveau, la gorge droite haute (30) à la gorge droite basse (32).

13. Procédé selon la revendication 12, caractérisé en ce qu'au moins l'une des gorges droites (30) est rectifiée par meulage après creusement par déformation des gorges arquées (36).

14. Procédé selon l'une des revendications 12 ou 13, caractérisé en ce que des chemins en pente ( ① - ② ) sont creusés conjointement dans les tronçons finaux droits (a) de la gorge droite haute (30), lors de la formation des tronçons de gorge arquée (36).

15. Procédé selon l'une des revendications 12 à 14, caractérisé en ce que, dans les zones de raccordement à la gorge droite basse (32), les gorges arquées (36) sont creusées avec une profondeur de déformation telle que sont obtenus des niveaux minimaux ( ⑤ - ⑥ ), situés plus bas que le niveau de la gorge droite basse (32).

16. Procédé selon la revendication 15, caractérisé en ce que la profondeur de creusement des gorges arquées (36) dans la zone de raccordement à la gorge droite basse (32) est choisie telle que les niveaux minimaux ( ⑤ - ⑥ ) existent encore après rectification par meulage de la gorge droite basse (32).

17. Procédé selon l'une des revendications 12 à 16, caractérisé en ce que des évidements (52), recevant lors du creusement par déformation au moins une partie du matériau refoulé de la plaque de roulement, sont ménagés aux extrémités de la barre profilée (14).

18. Procédé selon l'une des revendications 12 à 17, caractérisé en ce que la surface extérieure (16) est rectifiée par meulage, avant ou après la rectification par meulage des gorges droites (30,32).

19. Procédé selon l'une des revendications 12 à 18, caractérisé en ce que la surface extérieure (16) est rectifiée par meulage, après la rectification par meulage des gorges droites (30,32), les gorges droites (30,32) rectifiées étant utilisées pour opérer le positionnement de la barre profilée (14), lors de la rectification par meulage de la surface extérieure (16).

20. Procédé selon l'une des revendications 12 à 19, caractérisé en ce que la surface extérieure (16) est réalisée sous forme de surface de basculement.

21. Procédé selon la revendication 20, caractérisé en ce que la surface de basculement (16) est formée avec une zone longitudinale médiane (f), s'étendant parallèlement à la piste de roulement (30) de la rangée de billes porteuse (22), et en ce que, sur cette zone longitudinale médiane (f), sont formées, s'y raccordant, des arrondis (g) à convexité orientée radialement vers l'extérieur, et, sur ces arrondis (g), s'y raccordant également, des zones longitudinales (h) orientées axialement vers l'extérieur, qui s'étendent axialement vers l'extérieur et radialement vers l'intérieur, de préférence rectilignes.

22. Procédé selon la revendication 21, caractérisé en ce que la longueur totale axiale (i) d'une rangée de billes porteuse est d'environ 100 % à environ 200 %, de préférence d'environ 130 % à environ 180 % le diamètre d'arbre correspondant,
en ce que la longueur axiale de la zone longitudinale médiane (f) est d'environ 2 % à environ 15 % du diamètre d'arbre correspondant, de préférence d'environ 5 % à environ 10 % du diamètre d'arbre correspondant,
en ce que l'arrondi (g) est réalisé avec un rayon de courbure (g1) qui est supérieur à 100 %, de préférence supérieur à 150 %, par exemple de 167 % à 300 % du diamètre d'arbre correspondant et
en ce que l'inclinaison des zones longitudinales extérieures axialement (h), par rapport à la piste de roulement (30) de la rangée de billes porteuse (22), est choisie de telle façon que l'inclinaison est en moyenne d'environ 25 à 45 minutes d'angle, de préférence d'environ 35 minutes d'angle.
